**Europäisches Patentamt**

**European Patent Office**

**Office européen des brevets**

(19)

(11) Veröffentlichungsnummer: **0 132 442**

**A1**

(12) ## EUROPÄISCHE PATENTANMELDUNG

(21) Anmeldenummer: **81108994.5**

(22) Anmeldetag: **01.08.78**

(51) Int. Cl.⁴: **F 16 H 25/20**

(30) Priorität: **31.08.77 DE 2739136**
**20.09.77 DE 2742163**
**08.10.77 DE 2745404**
**03.04.78 DE 2814228**

(43) Veröffentlichungstag der Anmeldung:
**13.02.85 Patentblatt 85/7**

(84) Benannte Vertragsstaaten:
**BE CH DE FR GB LI NL SE**

(80) Veröffentlichungsnummer der früheren
Anmeldung nach Art. 76 EPÜ: **0 000 877**

(71) Anmelder: **Grisebach, Hans-Theodor**
**Kampstrasse 7**
**D-4750 Unna(DE)**

(72) Erfinder: **Grisebach, Hans-Theodor**
**Kampstrasse 7**
**D-4750 Unna(DE)**

(74) Vertreter: **Patentanwälte Zellentin**
**Zweibrückenstrasse 15**
**D-8000 München 2(DE)**

(54) **Stellgerät mit Spindeltrieb.**

(57) Bei einem Stellgerät 1 mit beidendig in Zuglagern 2 gelagerter, motorisch drehbar angetriebener, nur Zugkräfte übertragender Spindel 3, deren drehgesicherte Mutter 4 Axialbewegungen ausführt und vorzugsweise mit dem axialen Bewegungsverlauf angeordneten Dämpfungsmittel ausgerüstet ist, wird zur Übertragung möglichst hoher Lasten bei einem möglichst langen Hub mit einem möglichst preiswerten Stellgerät und zur Erzielung hoher Knicksteifigkeit beider dem Stellgerät zugeordneten Telskopteile so ausgebildet, daß ein erstes 5 und ein zweites Teleskopteil 6 aneinander geführt und zur vollen Aufnahme aller Druck-, Zug- und Querkräfte ausgelegt ist, wobei sich das erste Teleskopteil 5 von einem unteren Spindelzulager 7 zu einem Lagerträger 8 des oberen Spindelzuglagers erstreckt, wobei die Spindel 3 etwa in der Querschnittsmitte beider Teleskopteile 5, 6 angeordnet ist und das den Stößel 10 bildende zweite Teleskopteil 6 mit seinen Wandungen 11 die Spindel 3 mit einem Abstand umgibt, der gleich oder größer ist als der zu denen des ersten Teleskopteiles 5.

FIG.1

- 1 -

Ausscheidung Teil III
aus der
Europäischen Patentanmeldung 78100560.8

des Herrn

Hans-Theodor Grisebach, Kampstr. 7, 4750 Unna

## Stellgerät mit Spindeltrieb

Die Erfindung bezieht sich auf Stellgeräte mit beidendig in Zuglagern gelagerter, motorisch drehbar angetriebener, nur Zugkräfte übertragender Spindel, deren drehgesicherte Mutter Axialbewegungen ausführt, und mit im axialen Bewegungsverlauf angeordneten Dämpfungsmittel versehen ist.

Ein Stellgerät dieser Art ist aus der DE-OS 21 06 933 bekannt. Hier handelt es sich jedoch nicht um Stellgeräte im eigentlichen Sinne, sondern um eine Vorrichtung zum Drehen einer Welle, insbesondere eines Ventilschaftes, mit einem rechtwinklig an der zu drehenden Welle befestig-(en Arm, einer gegenüber dem Arm drehbar befestigten Schnecke und einer mittels Gewinde auf der Schnecke befestigten in axialer Richtung bewegbaren Zapfenmutter. Ein Stellgerät aber soll axialen Zug oder Schub ausüben und beispielsweise einen hydraulischen Zylinder ersetzen können.

Ein Stellgerät mit Spindeltrieb, bei dem die Spindel beidendig gelagert ist, ist aus der DE-OS 24 61 773.0 zu entnehmen. Hier sind die Spindeln parallel zueinander angeordnet und gemeinsam angetrieben und mehrere Muttern sind kardanisch mit einem Stößel verbunden. Durch diese Ausbildung läßt sich eine hohe Leistung auch mit Spindeln geringen Durchmessers übertragen und es lassen sich große Hublängen erreichen. Gerollte Kugelspindeln sind beispielsweise in häufig verwendeten Längen und Durchmessermaßen sehr preiswert, während größere Durchmesser Sonderanfertigungen erfordern und unverhältnismäßig viel teurer in der Beschaffung sind.

Bei Stellgeräten mit Spindeltrieb muß zwischen Trapezspindeltrieb und Kugelspindel mit Kugelumlaufmutter unterschieden werden. Während bei Trapezspindeltrieben der Wirkungsgrad sehr niedrig, etwa bei 0,3 liegt, können mit Kugelumlaufmuttern und Kugelspindeln Wirkungsgrade bis 0,9 erreicht werden. Die Letztgenannten sind daher nicht selbsthemmend. Soll eine Selbsthemmung vorgesehen sein, so ist es erforderlich, eine zusätzliche Bremse, beispielsweise eine Federdruck- oder Magnetbremse vorzusehen.

Je nach dem Verwendungszweck werden daher Kugelspindeltriebe oder Trapezspindeltriebe in Stellgeräten verwendet. Werden gerollte Kugelspindeln und Kugelumlaufmuttern verwendet, müssen Spitzenlasten vermieden werden, hierzu können axiale Dämpfungen sowie auch Rotationsdämpfungen eingeschaltet und durch besondere kostruktive Maßnahmen die Schwungmomente des Motors oder anderer rotierender Teile so gering als möglich gehalten werden.

Eine Spindel, die beidendig in Zuglagern aufgehängt ist, vermeidet die Aufnahme von Druckkräften. Daraus folgt, daß auch keine Biegekräfte durch diese Druckkräfte erzeugt werden können. Je nach der verwendeten Länge kann daher eine nur auf Zugkräfte beanspruchte Spindel ein Vielfaches der Kräfte übertragen, die sonst einer auch auf Druck beanspruchten Spindel zugemutet werden könnten. Die Grenzen der Belastung liegen daher meist mehr in der Ausbildung der Kugelumlaufmutter, deren Belastung natürlich in den zugelassenen Grenzen bleiben muß.

Aufgabe der Erfindung ist es, möglichst hohe Lasten bei einem möglichst langen Hub mit einem möglichst preiswerten Stellgerät zu übertragen, wobei auch für eine entsprechende Erhöhung der Knicksteifigkeit der dem Stellgerät zugeordneten Teleskopteile Sorge getragen werden soll.

Die Erfindung löst die gestellte Aufgabe durch die Kombination der vorerwähnten Merkmale des Oberbegriffes des Anspruch 1 mit den folgenden Merkmalen

a) ein erstes und ein zweites Teleskopteil sind aneinander geführt und zur vollen Aufnahme aller Druck-, Zug- und Querkräfte ausgelegt, wobei sich das erste Teleskopteil von einem unteren Spindelzuglager bis zu einem Lagerträger des oberen Spindelzuglagers erstreckt und

b) die Spindel ist etwa in der Querschnittsmitte beider Teleskopteile angeordnet, wobei das den Stößel bildende zweite Teleskopteil mit seinen Wandungen oder Einzelsäulen die Spindel mit einem Abstand umgibt, der gleich oder größer ist als der zu den Wandungen oder Einzelsäulen des ersten Teleskopteiles.

Durch diese erfindungsgemäße Lösung werden beiden Teleskopteilen möglichst große Durchmesser zugeordnet, so daß diese besonders knick-, druck- oder zugsteif ausgebildet werden können. Dies kann mit verhältnismäßig einfachen konstruktiven Mitteln und geringem Kostenaufwand geschehen. Die Spindel oder die Spindeln können in neutraler Position etwa in der Querschnittsmitte angeordnet sein, ihr Durchmesser ist gering und daher ist das Gewicht gering. Die Teleskopteile sind trotz großen Durchmessers aus Leichtbauteilen herstellbar bzw. in ihrer Konstruktion leicht gestaltet.

Die Ansprüche 2 und 3 befassen sich mit einer besonders vorteilhaften Ausgestaltung, die ggf. auch von den übrigen Ansprüchen unabhängige Anwendungen erfaßt und von der Aufgabenstellung ausgeht, bei überlangen Stellgeräten Sonderkonstruktionen zu vermeiden und damit die Kosten derartiger Geräte entscheidend zu senken. Ein langes Stellgerät bildet einen Träger, der schon aufgrund seines Eigengewichtes erheblichen Biegebeanspruchungen unterworfen ist. Trapezspindeln, insbesondere jedoch gerollte Kugelspindeln, werden nur in genormten, handelsüblichen Längen hergestellt. Alle Überlängen würden erhebliche Mehrkosten bzw. Sonderanfertigungen erfordern. Die Hubgeschwindigkeit von Stellgeräten ist abhängig von der Auslegung der Spindel, dem Steigungswinkel und der Drehzahl der Spindel. Wünschenswert ist die Verwendung der üblichen Steigungen, Drehzahlen und Spindeldurchmesser. Sowohl eine Hubgeschwindigkeitsverlangsamung als auch eine -steigerung erforderten bisher stets ein geändertes konstruktives Konzept. Die Erfindung strebt aber ein Baukastensystem an, bei dem stets mit den gleichen Grundbauteilen ein großes Spektrum an Anforderungen erfüllt werden kann. Die Erfindung löst die gestellte Aufgabe dadurch, daß wenigstens zwei von einem gemeinsamen Antrieb oder getrennten Antrieben angetriebene Spindeln in axialer Verlängerung zueinander so verbunden sind, daß ihre Kupplungsmittel versteifende Knoten innerhalb des von der Kombination mehrerer Einzelgeräte zusammengestellten langen Stellgerätes bilden. Der oder die versteifende(n) Knoten können dann nach einem weiteren Merkmal der Erfindung von einem Antriebsblock gebildet sein, wobei in weiterer Ausgestaltung zwei steuerbare Antriebsblöcke zu einem derartigen Knoten verbunden sind.

Die Vorteile der Erfindung ergeben sich schon aus der Lösung der Aufgabenstellungen, denn es wird durch die Erfindung nunmehr möglich, industrielle Stellaufgaben über lange Wege bei großen Kräften mit für die jeweilige Aufgabe angepaßten Kosten zu erstellen und somit Stellgeräte mit Spindeltrieb auch dort einzusetzen, wo bisher ausschließlich hydraulische oder pneumatische Zylinder zur Anwendung kommen. Da die Hubgeschwindigkeit jedes Teilstellgerätes sich zu der Hubgeschwindigkeit der anderen Teilstellgeräte addiert, sind die anwendbaren Hubgeschwindigkeiten in einem großen Bereich variabel.

Die Zeichnung zeigt mit

Figur 1    eine perspektivische Ansicht mit Teilschnitten eines erfindungsgemäßen Stellgerätes,

Figur 2    eine Ausführungsform nach Figur 1, jedoch mit mit geteiltem Stößelrohr,

Figur 3    eine Darstellung der Verbindungsarme mit Mutter,

Figur 4    die Anordnung der Mutter mit Verbindungsarmen in einem Stellgerät,

Figur 5    die Anordnung der Trägersäulen von Stößel und Lagerträger,

Figur 6    eine Anordnung nach Figur 5, jedoch unter Verwendung von Profilrohren,

Figur 7    die perspektivische Darstellung eines Stellgerätes mit dreieckiger Grundform,

Figur 8    ein Zweispindelstellgerät mit im Querschnitt
           H-förmigen Lagerträger bzw. Teleskopteil,

Figur 9    die hintereinander angeordnete Anordnung
           mehrerer Einzelstellgeräte,

Figur 10   die Zusammenfassung zweier Antriebsblöcke
           zu einem Bambusknoten.

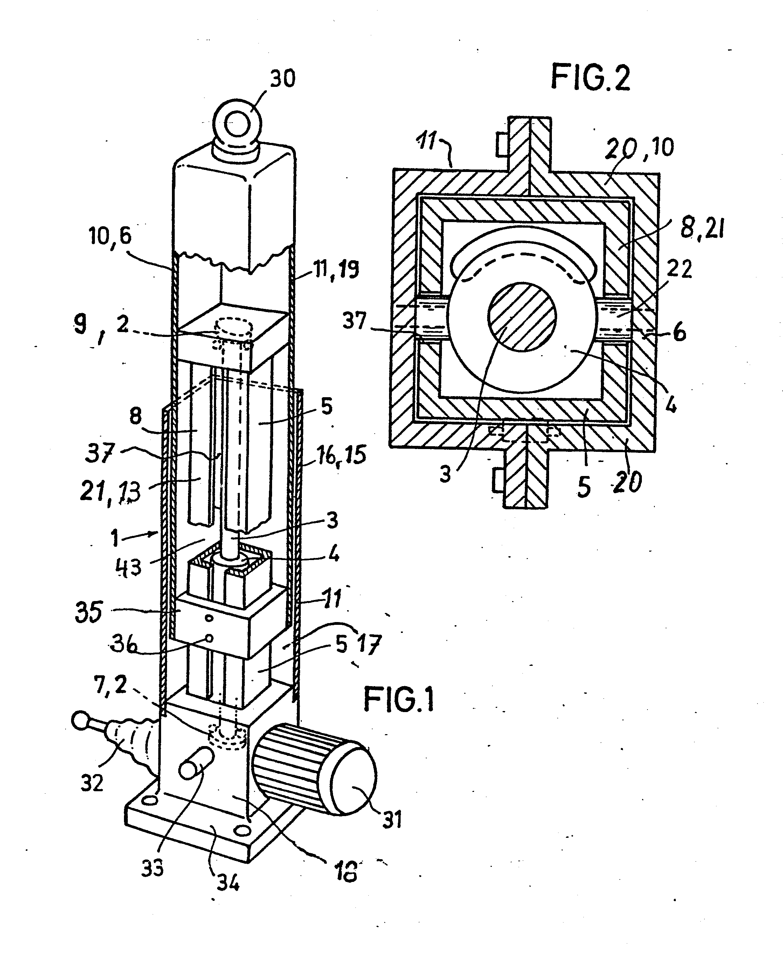

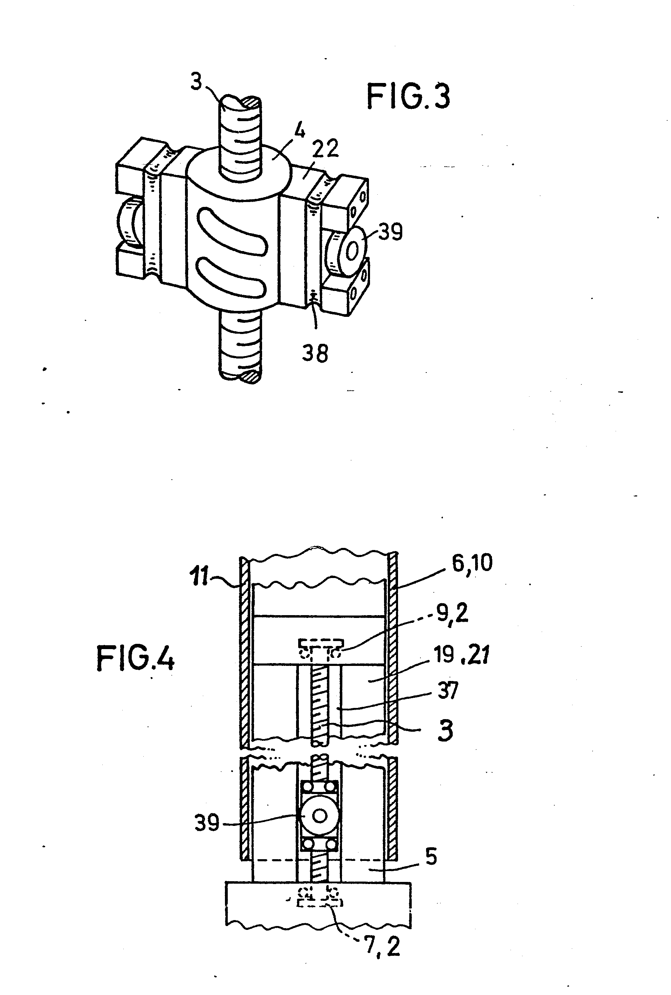

Bei einem Stellgerät 1 sind die Zuglager 2 der Spindel 3,
die mit ihrer Mutter 4 im ersten Teleskopteil 5 angeordnet ist, an beiden Enden eines Lagerträgers 8 angeordnet. Das untere Spindelzuglager 7 ist im Antriebsblock 18 und das obere Spindelzuglager 9 im Lagerträger 8 angeordnet.
Der Antriebsblock 18 trägt den Motor 31, beliebige
Steuer- und Schaltmittel 32 und ggf. Lagerzapfen 33
oder einen Anschlußflansch 34. Mit ihm fest verbunden
ist das erste Teleskopteil 5, das ein beispielsweise
einseitig geschlitztes Rechteckrohr 21 ist. Dieses wird
von einem Gleitrahmen 35 umgeben, von dem nach innen gerichtet die Mutter 4 ausgeht und beispielsweise über
Schrauben 36 befestigt ist. Der Gleitrahmen 35 bildet
das untere Ende des Stößels 10 und dieser das zweite
Teleskopteil 6 mit den Anschlußmitteln 30. Der sich
unterhalb des Gleitrahmens 35 öffnende Spindelraum 17
ist durch Umhüllungen 16 nach außen abgedeckt, die im
dargestellten Ausführungsbeispiel das dritte Teleskopteil 15
bilden. Dieses dritte Teleskopteil 15 hat auch die Aufgabe eine zusätzliche Versteifung zu erzielen und es
umfaßt den Stößel 10 führend.
Der Stößel 10 ist bei Figur 2 aus zwei U-Profilen 20 zusammengesetzt, die ein geschlitztes Rechteckrohr 21 umschließen. Dieses Rohr 21 weist zwei seitliche Schlitze 37 auf, die von Armen 22 durchdrungen sind, die ihrerseits eine Verbindung zwischen dem Stößel 6 und der Mutter 4 herstellen. Die Arme 22 können, wie die Figur 3 zeigt, durch elastische Mittel 38 zur Dämpfung von Stoßbelastungen unterteilt sein und Rollen 39 tragen, die in Schlitzen 37 geführt sind.

Die Figur 4 erläutert die Darstellung nach Figur 2. Das erste Teleskopteil 5 ist vom zweiten Teleskopteil 6 geführt umgeben. Zwischen dem unteren Spindelzuglager 7 und dem oberen Spindelzuglager 9 befindet sich, wie schon beschrieben, die Spindel 3 (siehe Figur 3). Die Rollen 39 sind sichtbar in dem Schlitz 37 des Rohres 19. Das zweite Teleskopteil 6 bildet den Stößel 10.

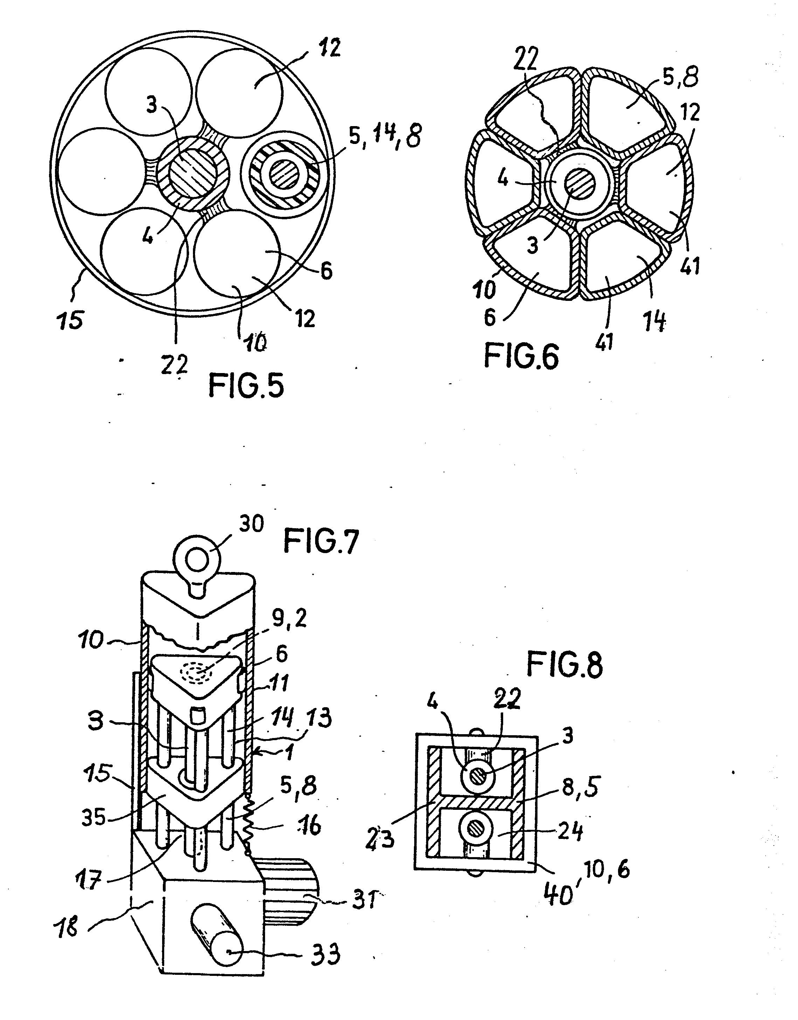

Das erste Teleskopteil 5 und das zweite Teleskopteil 6 können in Einzelsäulen 12, 14 aufgeteilt sein, die, wie die Figuren 5 und 6 zeigen, als Rundrohre oder als Profilrohre ausgebildet sein können. Die Profilform kann so gewählt werden, daß sich die Einzelsäulen 12, 14 zu einem Kreisring ergänzen.

Die Figur 7 unterscheidet sich von der Ausführungsform nach Figur 1 nur durch die Auflösung des Lagerträgers 8 in Einzelsäulen 14 und eine dreieckige Grundform beider Teleskopteile 5 und 6. Zur Abdeckung des Spindelraumes 17 kann ein drittes Teleskopteil 15 oder aber auch eine als Faltenbalg ausgebildete Umhüllung 16 vorgesehen sein.

Reicht eine einzige Spindel 3 nicht aus, um die erforderlichen Kräfte zu übertragen, so kann, wie Figur 8 zeigt, anstelle einer Spindel 3 auch eine Doppelspindelanordnung gewählt werden. Der Lagerträger 8 bildet ein Doppel-T-Profil 23, in dessen U-förmigen Kanälen 24 je eine Spindel 3 von je einer Mutter 4 umgeben angeordnet ist und der Stößel 10 bildet ein Rechteckrohr 40.

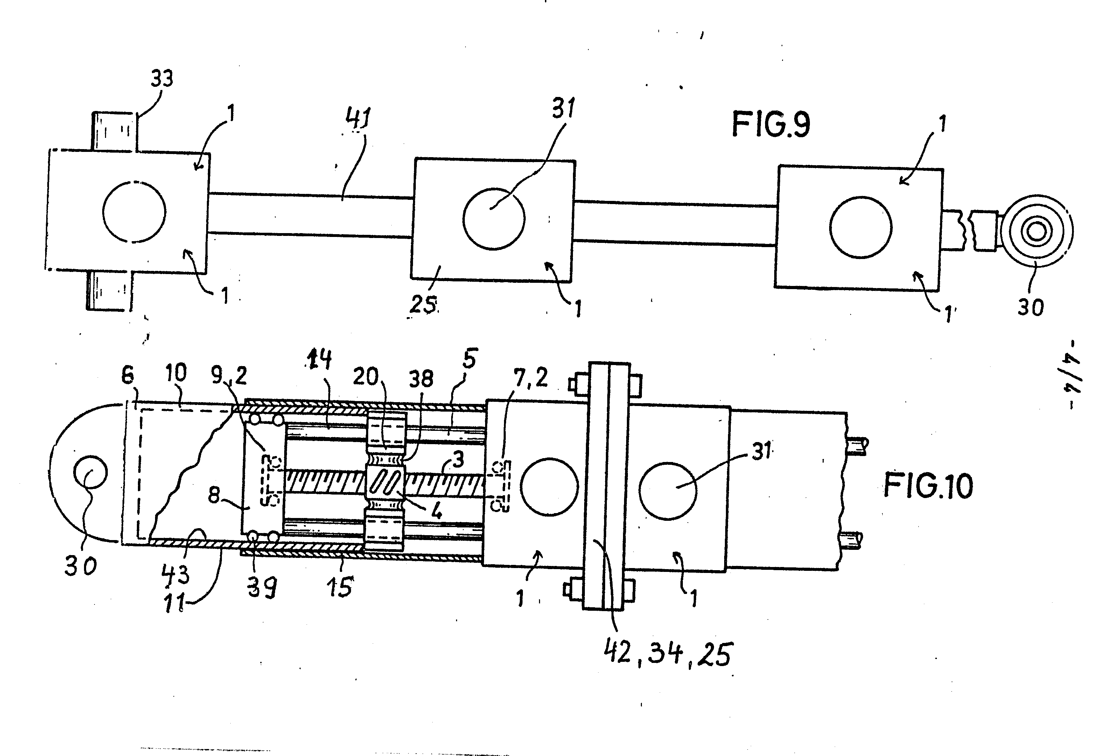

Die Zusammenfassung mehrerer Einzelstellgeräte 1 zu einem verlängerten Gerät zeigt die Figur 9. Die Hubgeschwindigkeiten aller Stellgeräte addieren sich, wenn sie gleichgerichtet laufen und subtrahieren sich, wenn sie entgegengerichtet laufen. Lange Stellgeräte für einen großen Hub mußten bisher sehr aufwendig und schwer gebaut werden, da wegen der auftretenden Biegemomente und der Druckkomponente auch im Durchmesser entsprechend groß dimensionierte Spindeln Verwendung finden mußten. Die Antriebsblöcke 18 bilden Knoten 25, durch die der von dem Gesamtgerät gebildete Träger 41 biegesteifer gemacht werden kann.

Werden zwei derartige Antriebsblöcke 18 zu einem Doppelblock 42 zusammengefaßt, so entsteht eine Ausführungsform nach Figur 10, wobei natürlich mehrere solcher Doppelgeräte wiederum zu einer Einheit entsprechend Figur 9 zusammengefaßt werden können. Die Motoren 31 können getrennt gesteuert sein, so daß den Einzelstellgeräten nicht nur unterschiedliche Hubgeschwindigkeiten sondern auch unterschiedliche Drehrichtungen zugeordnet werden können. Der Teilschnitt nach Figur 10 zeigt einen Aufbau ähnlich wie der nach den Figuren 1 und 7. Die Arme 22 sind an den Einzelsäulen 14 geführt und durch elastische Mittel 38 unterteilt. Die Mutter 4 läuft auf der Spindel 3, die mit ihrem oberen Zuglager 9 im Lagerträger 8 aufgehängt und mit ihrem unteren Lagerträger 7 an den Antriebsblock 18 angeschlossen ist. Der Lagerträger 8 kann beispielsweise über Rollen oder Gleitsteine 39 an den Innenflächen 43 des Stößels 10 geführt sein, der das zweite Teleskopteil 6 bildet. Ein drittes Teleskopteil 15 dient als Knickversteifung und dichtende Umhüllung 16.

Bezugszeichenliste

| | | | |
|---|---|---|---|
| 1 | Stellgerät | 38 | elastische Mittel (Dämpfung) |
| 2 | Zuglager | 39 | Rollen |
| 3 | Spindel | 40 | Rechteckrohr |
| 4 | Mutter | 41 | Träger |
| 5 | erstes Teleskopteil | 42 | Doppelblock |
| 6 | zweites Teleskopteil | 43 | Innenflächen des Stößels |
| 7 | unteres Spindelzuglager | | |
| 8 | Lagerträger | | |
| 9 | oberes Spindelzuglager | | |
| 10 | Stößel | | |
| 11 | Wandungen des zweiten Teleskopteils 6 | | |
| 12 | Einzelsäulen des zweiten Teleskopteils 6 | | |
| 13 | Wandungen des ersten Teleskopteiles 5 | | |
| 14 | Einzelsäulen des ersten Teleskopteiles 5 | | |
| 15 | drittes Teleskopteil | | |
| 16 | dichtende Umhüllung | | |
| 17 | Spindelraum | | |
| 18 | Antriebsblock | | |
| 19 | Rohr | | |
| 20 | U-Profil | | |
| 21 | geschlitztes Rechteckrohr | | |
| 22 | Arm | | |
| 23 | Doppel-T-Profil | | |
| 24 | U-förmige Kanäle | | |
| 25 | Knoten | | |
| 26 | | | |
| 27 | | | |
| 28 | | | |
| 29 | | | |
| 30 | Anschlußmittel | | |
| 31 | Motor | | |
| 32 | Schaltmittel | | |
| 33 | Lagerzapfen | | |
| 34 | Anschlußflansch | | |
| 35 | Gleitrahmen | | |
| 36 | Schrauben | | |
| 37 | Schlitze | | |

Patentansprüche:

1. Stellgerät (1) mit beidendig in Zuglagern (2) gelagerter, motorisch drehbar angetriebener, nur Zugkräfte übertragender Spindel (3), deren drehgesicherte Mutter (4) Axialbewegungen ausführt, dadurch gekennzeichnet, daß ein erstes (5) und ein zweites Teleskopteil (6) aneinander geführt und zur vollen Aufnahme aller Druck-, Zug- und Querkräfte ausgelegt sind, wobei sich das erste Teleskopteil (5) von einem unteren Spindelzuglager (7) bis zu dem oberen Spindelzuglager (9) in dem Lagerträger (8) erstreckt und daß die Spindel etwa in der Querschnittsmitte beider Teleskopteile (5, 6) angeordnet ist, wobei das den Stößel (10) bildende zweite Teleskopteil (6) mit seinen Wandungen (11) oder Einzelsäulen (12) die Spindel (3) mit einem Abstand umgibt, der gleich oder größer ist als der zu den Wandungen (13) oder Einzelsäulen (14) des ersten Teleskopteiles (5).

2. Stellgerät nach Anspruch 1, dadurch gekennzeichnet, daß ein drittes Teleskopteil (15) als Schlitzverschluß bzw. dichtende Umhüllung (16) für den Spindelraum (17) dient.

3. Stellgerät nach Anspruch 2, dadurch gekennzeichnet, daß das dritte Teleskopteil (15) ein auch Knickkräfte aufnehmendes, am Außenumfang des Stößels (10) geführtes, fest mit einem Antriebsblock (18) verbundenes Teil ist.

4. Stellgerät nach einem oder mehreren der Ansprüche
1 bis 3,
dadurch gekennzeichnet,
daß der Stößel (10) ein Rohr (19) ist, welches den
Lagerträger (8) umschließt und dieser ein U-Profil
(20) oder ein geschlitztes Rechteckrohr (21) ist,
wobei die Mutter (4) über einen als Verbindungsmittel dienenden Arm (22) mit dem Stößel (10) verbunden ist.

5. Stellgerät nach einem oder mehreren der Ansprüche
1 bis 4,
dadurch gekennzeichnet,
daß als Lagerträger (8) ein Doppel-T-Profil (23)
dient, in dessen beiden U-förmigen Kanälen (24) je
eine Spindel (3) von je einer Mutter (4) umgeben
angeordnet ist und der Stößel (10) ein Rechteckrohr (21) bildet.

6. Stellgerät nach einem oder mehreren der Ansprüche
1 bis 6,
dadurch gekennzeichnet,
daß die Einzelsäulen (14) des Lagerträgers (8) und
die des Stößels (10) sich zu einer Ringform ergänzen.

7. Stellgerät (1) mit beidendig in Zuglagern (2) gelagerter motorisch drehbar a etriebener, n r Zugkräfte übertragender Spindel (3), deren drehgesicherte Mutter (4) Axialbewegungen ausführt, wobei ein erstes (5) und ein zweites Teleskopteil (6)
aneinander geführt und zur vollen Aufnahme aller
Druck-, Zug- und Querkräfte ausgelegt sind, wobei
sich das erste Teleskopteil (5) von einem unteren
Spindelzuglager (7) bis zu dem oberen Spindelzuglager (9) in den Lagerkörper (8) erstreckt und
mehrere Spindeln (5) mit mehreren Muttern (4) vorgesehen sind oder nach einem oder mehreren der
Ansprüche 1 bis 6,

dadurch gekennzeichnet,
daß wenigstens zwei gemeinsam oder getrennt von
Antrieben        angetriebene Spindeln (3) axial
zueinander versetzt so miteinander verbunden
sind, daß sich Hübe und Geschwindigkeiten addieren
oder subtrahieren.

8.  Stellgerät nach Anspruch 7,
    dadurch gekennzeichnet,
    daß die Spindeln (3) parallel zueinander angeordnet
    sind und sich ihre Längen überlappen.

9.  Stellgerät nach Anspruch 7,
    dadurch gekennzeichnet,
    daß mehrere Stellgeräte (1) hintereinander in Reihe
    angeordnet und miteinander verbunden sind und die Antriebe versteifende Knoten (25) bilden.

10. Stellgerät nach Anspruch 9,
    dadurch gekennzeichnet,
    daß der oder die versteifenden Knoten (25) je von
    mindestens einem Antriebsblock (18) gebildet sind.

11. Stellgerät nach Anspruch 10,
    dadurch gekennzeichnet,
    daß zwei getrennt steuerbare Antriebsblöcke (18)
    zu einem Knoten (25) verbunden sind.

FIG.2

FIG.1

0132442

-2/4-

**FIG.3**

**FIG.4**

0132442

-3/4-

FIG.5

FIG.6

FIG.7

FIG.8

FIG.9

FIG.10

0132442

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| E | AT-B- 351 200 (DICKERTMANN HEBEZEUGFABRIK AG) * Insgesamt * | 1-4 | F 16 H 25/20 |
| | --- | | |
| A | US-A-2 806 383 (GEYER H.M.) * Insgesamt * | 1,4 | |
| | --- | | |
| A | US-A-3 652 043 (JONES et al.) * Spalte 2, Zeilen 4-11; Figur 1 * | 4 | |
| | ----- | | |

RECHERCHIERTE
SACHGEBIETE (Int. Cl. 3)

F 16 H
B 66 F
B 25 J

Der vorliegende Recherchenbericht wurde für alle Patentansprüche erstellt.

| Recherchenort DEN HAAG | Abschlußdatum der Recherche 11-04-1984 | Prüfer HARRISON M.C. |
|---|---|---|